Europäisches Patentamt

European Patent Office

Office européen des brevets

(11) Veröffentlichungsnummer: **0 355 183**
**A1**

(12) # EUROPÄISCHE PATENTANMELDUNG

(21) Anmeldenummer: 88113461.3

(22) Anmeldetag: 18.08.88

(51) Int. Cl.⁴: **H01G 4/14 , H01G 13/00 , H01G 4/40 , H01F 41/04 , H01L 21/70**

(43) Veröffentlichungstag der Anmeldung:
28.02.90 Patentblatt 90/09

(84) Benannte Vertragsstaaten:
AT BE CH DE ES FR GB GR IT LI LU NL SE

(71) Anmelder: **Siemens Aktiengesellschaft**
**Wittelsbacherplatz 2**
**D-8000 München 2(DE)**

(72) Erfinder: **Fetzer, Jürgen, Dipl.-Phys.**
**Mühlstrasse 19**
**D-7929 Dettingen(DE)**
Erfinder: **Fischer, Albert, Dr.**
**Max-Schmid-Strasse 20**
**D-8879 Kammeltal(DE)**
Erfinder: **Schadt, Franz, Dipl.-Phys.**
**Bonlandweg 8**
**D-8887 Bachhagel(DE)**

(54) **Verfahren und Vorrichtung zur kontinuierlichen Herstellung von Schichtstrukturen für elektrische Zwecke.**

(57) Zur Herstellung von Schichtstrukturen wird ein endloses Kunststoffband (5), das als Unterlage für die Schichtstruktur dient, durch eine Glimmpolymerisationsstation (1) und eine Metallbeschichtungsstation (2) geführt und in diesen Stationen werden Blendenbänder (9, 11) herangespult und wieder abgespult. Bei der Vorrichtung wird das Kunststoffband (5) als Transporteinrichtung benutzt, das eine zur Justierung dienende Perforation mit einer ungeraden Zahl von Löchern aufweist; auch die Blendenbänder enthalten solche Löcher, wobei in die Löcher eingreifende Stacheln (14, 15) an den Führungsrollen (12, 13, 18, 19) für die Blendenbänder vorgesehen sind.

FIG 1

## Verfahren und Vorrichtung zur kontinuierlichen Herstellung großer Stückzahlen von Schichtstrukturen für elektrische Zwecke

Die Erfindung betrifft ein Verfahren zur kontinuierlichen Herstellung großer Stückzahlen von Schichtstrukturen für elektrische Zwecke, insbesondere Kondensatoren, Widerstände, Induktionen oder Schichtschaltungen, bei denen auf einer isolierenden Unterlage Metallschichten und Isolierstoffschichten miteinander abwechseln und die Metallschichten zu voneinander getrennten Seitenbereichen geführt sind, wobei an einer Station die Isolierstoffschichten durch Glimmpolymerisation im Vakuum und an einer davon getrennten Station die Metallschichten ebenfalls im Vakuum abgeschieden werden, indem auf einem umlaufenden Träger die Isolierstoffschichten an durch Blenden abgedeckten Flächen erzeugt werden, wonach ebenfalls durch Blenden abgedeckt die Metallschichten abgeschieden werden und diese Vorgänge so oft wiederholt werden, bis die gewünschte Schichtzahl erreicht ist und dabei jeweils von Schicht zu Schicht die Metallschichten gegeneinander versetzt aufgetragen werden.

Die Erfindung betrifft ferner eine Vorrichtung zur Durchführung dieses Verfahrens, die eine Station für die Glimmpolymerisation des Isolierstoffes und eine Station für die Beschichtung mit Metall und zwischen diesen angeordnete Vakuumschleusen, eine umlaufende Transporteinrichtung von der Glimmpolymerisationsstation zur Metallbeschichtungsstation und wieder zurück und ein Blendensystem enthält.

Schichtstrukturen für elektrische Zwecke, deren Herstellung die vorliegende Erfindung betrifft, sind an sich bekannt.

So ist in der DE-PS 28 43 581 (entsprechend der US-PS 4 376 329) ein elektrischer Schichtkondensator beschrieben, bei dem auf einem Trägerkörper aus Isolierstoff abwechselnd Metallschichten der Beläge und Isolierstoffschichten als Dielektrika übereinander angeordnet sind, bei dem die Metallschichten jeweils des einen Belages auf einer Seite des Kondensators und die des anderen Belages auf der anderen Seite des Kondensators über die Dielektrikumsschichten vorstehen und die vorstehenden Randbereiche der Metallschichten der Beläge ohne dazwischenliegenden Isolierstoff aufeinander angeordnet sind, bei dem die so gebildeten Randbereiche der Beläge mit Anschlußelementen elektrisch leitend verbunden sind und bei dem der Trägerkörper im Bereich der Randbereiche der Beläge Stirnflächen aufweist, die auf zwei gegenüberliegenden Seiten mit Metallschichten überzogen sind. In dieser Patentschrift ist auch ein Verfahren zur Herstellung solcher Kondensatoren beschrieben, das im wesentlichen darin besteht, daß ein größerer Gesamt-Kondensator hergestellt wird, von dem die einzelnden Kondensatoren abgeschnitten werden.

Für derartige elektrische Schichtkondensatoren ist es aus der europäischen Patentschrift 0 015 532 (entsprechend der US-PS 4 379 182) sowie aus der DE-PS 29 09 840 bekannt, die einzelnen Metallbelegungen einander gegenüber schräg, insbesondere diagonal, zu versetzen, um dadurch bessere Raumausnutzung und bessere Kontaktmöglichkeiten zu erzielen.

In der DE-OS 32 31 577 ist ferner beschrieben, daß man Schichtkondensatoren mit durch Glimmpolymerisation hergestelltem Dielektrikum mit einer isolierenden Umhüllung versehen kann.

Außer einzelnen elektrischen Kondensatoren in Schichtbauweise mit durch Glimmpolymerisation hergestelltem Dielektrikum und durch Aufdampfverfahren oder durch Kathodenzerstäubung hergestellten Metallschichten als Belegungen sind auch Netzwerke aus Kondensator und Widerstand bekannt, beispielsweise beschrieben in der DE-PS 29 03 025 oder der DE-OS 30 24 030. Der Widerstandsbereich eines solchen RC-Netzwerkes wird durch voneinander isolierte Leiterbahnen, beispielsweise in Mäanderform, dargestellt. Die Metallschichten für die Belegungen des Kondensators und für die Leiterbahnen des Widerstandes werden in einem Arbeitsgang durch Anwendung entsprechender Blenden hergestellt.

Entsprechende Überlegungen können auch für die Herstellung von Induktivitäten, d.h. für schraubenlinienförmig übereinander angeordnete Leiterbahnen gelten, bei denen die einzelnen Windungsgänge voneinander - außer an den Übergangsstellen von einer zur nächsten Windung - durch Isolierschichten getrennt sind. Solche Induktivitäten, hergestellt nach den Methoden gedruckter Schaltungen, sind ebenfalls hinreichend bekannt.

Für die Herstellung elektrischer Bauelemente der hier in Rede stehenden Art, insbesondere von sogenannten Schichtkondensatoren, sind eine Reihe von Vorrichtungen bekannt, beispielsweise aus der DE-PS 28 47 620 (entsprechend der GB-PS 20 36 087) oder der DE-PS 29 00 772, denen gemeinsam ist, daß ein Zweikammersystem verwendet wird, das um den Umfang einer rotierenden Trommel angeordnet ist und bei dem zwischen den Kammern Schleusen vorhanden sind, um unterschiedliche Drücke in den Kammern anwenden zu können.

Die einzelnen elektrischen Bauelemente werden entweder in Vertiefungen in der Trommel eingebracht und durch einzelne, verschiebbare Blenden je Vertiefung hergestellt (DE-PS 28 47 620) oder es wird ein an der Trommel anliegendes Band in Form einer Trägerfolie, das später als Träger für das Bauelement dient, verwendet, das von einem an der Trägerfolie anliegenden endlosen Blendenband begleitet durch die einzelnen Zonen geführt wird (DE-PS 29 00 772). Das endlose Blendenband umschließt dabei zwangsläufig nicht nur das an der Trommel anliegende Trägerband, sondern auch die Vorratsrollen für dieses Trägerband, woraus folgt, daß durch dieses Verfahren mit dieser Vorrichtung nur mehrschichtig längsbedampfte Kondensatorbänder mit randseitigem, metallfreiem Streifen hergestellt werden können, die danach beispielsweise zu Wickelkondensatoren verwickelt werden.

Ein Verfahren und eine Vorrichtung zur Herstellung von einzelnen Schichtkondensatoren, deren Dielektrikum durch Glimmpolymerisation hergestellt sind, sind beispielsweise auch in der europäischen Patentschrift 0 045 058 (entsprechend der US-PS 4 378 382) beschrieben, wo ebenfalls die einzelnen Bauelemente in Vertiefungen einer Trommel angeordnet sind.

In der DE-OS 28 44 491 ist eine Vakuum-Beschichtungsanlage mit Einrichtung zum kontinuierlichen Substrattransport beschrieben, die aus zwei durch Schlitzblenden getrennten, übereinander angeordneten Kammern besteht, wobei als Substrattransporteinrichtung eine endlose Kette verwendet wird, an die die einzelnen Substrate angehängt werden. Die Schlitzblenden zwischen den beiden Kammern dienen offensichtlich nur dazu, die jeweils in diesen Kammern vorhandenen Atmosphären voneinander zu trennen.

In der DE-AS 1 009 883 ist eine Hochvakuum-Bedampfungsanlage beschrieben, die sowohl zum Aufdampfen dünner metallischer oder dielektrischer Schichten wie auch zum Aufbringen solcher Schichten durch Kathodenzerstäubung auf bandförmiges Material geeignet ist. Das bandförmige Material wird dabei in einer Hochvakuumkammer von einer Vorratsrolle abgerollt, durch eine Schleusenanlage in eine andere Hochvakuumkammer geführt, dort beschichtet, wiederum durch eine andere Schleuse in die erste Hochvakuumkammer zurückgeführt und auf einer zweiten Vorratsrolle aufgewickelt. In den beiden Schleusen können gemäß einer Ausführungsform der Anlage Glimmentladungskathoden angeordnet sein, während gemäß einer anderen Ausführungsform der Anlage diese Glimmentladungskathoden in zwei äußeren Hochvakuumkammern angeordnet sind, von denen eine die Vorratsrolle zum Abwickeln des trägerförmigen Bandes und die andere die Vorratsrolle zum Aufwickeln des beschichteten trägerförmigen Bandes dient und wobei zwischen zwei Schleusenanlagen eine Hochvakuumkammer zur Beschichtung vorgesehen ist. Die Schleusensysteme sind von außen verstellbar. Blendensysteme zum Auftragen bestimmter Schichtstrukturen auf das Trägerband sind nicht vorgesehen und es sind im Grunde genommen auch keine Angaben enthalten, wie mehrere Schichten unterschiedlicher Art und unterschiedlicher Konfiguration auf das Trägerband aufgebracht werden kön nen.

In der DE-PS 29 00 724 ist eine Vorrichtung zur Beschichtung von Substraten im Vakuum beschrieben, die zumindest zwei Vakuumkammern und zwischen diesen angeordneten Vakuumschleusen enthält, in der eine Transporteinrichtung das zu beschichtende Substrat von einer ersten Kammer in eine zweite Kammer und wieder zurück in die erste Kammer führt und in der die zweite Kammer eine Einrichtung zur Metallbeschichtung enthält, wobei die Transporteinrichtung eine endlose Kette von starren Trägern und zwischen diesen angeordneten Dichtungsblöcken enthält, diese Kette über zwei Kettenräder umgelenkt wird, zwischen den Kettenrädern in Bereichen in denen die Kette sich geradlinig bewegt, jeweils zumindest eine Glimmentladungsstrecke und eine Vakuumschleuse angeordnet sind, die Vakuumschleuse die erste Vakuumkammer von der zweiten trennt und Einrichtungen zur exakten Führung der Kette zumindest im Bereich der Vakuumschleuse vorhanden sind und nicht zuletzt zumindest im Bereich der Glimmentladung Einrichtungen zur Kühlung der Substrate angeordnet sind.

Bei den bisher als bekannt geschilderten Verfahren und den ebenfalls bekannten Vorrichtungen ist ein relativ hoher Zeitaufwand erforderlich. Ferner muß beim Arbeiten mit unterschiedlichen Blenden (Masken) dafür gesorgt werden, daß diese Blenden jedenfalls im Bereich der Beschichtung in einen engen Kontakt mit dem zu beschichtenden Trägerband gebracht werden. Hierfür sind gesondert zu steuernde Apparaturen erforderlich. Außerdem sind Verunreinigungen und damit Schädigungen der herzustellenden elektrischen Bauelemente nicht zu vermeiden. Sowohl bei der Einzelfertigung solcher Strukturen als auch bei der Fertigung am laufenden Band ist die Zahl der herstellbaren Bauelemente begrenzt.

Durch den immer härtenden werdenden Wettbewerb auf dem Markt der elektrischen Bauelemente werden auch die Anforderungen an die Kondensatoren, Widerstände, Induktionen immer größer. Die wesentlichsten dieser Anforderungen sind:
- geringe Abmessung mit kleinsten Toleranzen,
- Chipbauweise zur einfacheren Bestückung gedruckter Schaltungen,
- geringere Kosten,
- hohe Zuverlässigkeit und nicht zuletzt
- die Eignung für höhere thermische Belastungen.

Hieraus folgt, daß Fertigungsprozesse erforderlich sind, die mit beträchtlich kleineren Materialkosten, geringerem Investment und kürzerer Fertigungszeit elektrische Bauelemente der hier in Rede stehenden Art mit besserer Qualität und in möglichst hohen Stückzahlen bereitstellen.

Der vorliegenden Erfindung liegt die Aufgabe zugrunde, ein diesen Forderungen gerecht werdendes Verfahren und eine Vorrichtung zur Durchführung dieses Verfahrens anzugeben.

Zur Lösung dieser Aufgabe ist das Verfahren der eingangs angegebenen Art erfindungsgemäß gekennzeichnet durch die Verfahrensschritte:

a) ein endloses Kunststoffband aus einem Material, das später als Unterlage für die fertige Schichtstruktur dient, wird als umlaufendes Trägerband durch die Beschichtungsstationen geführt,

b) bei der Herstellung der Isolierstoffschichten in der Glimmpolymerisationsstation wird das Kunststoffband über eine Kühltrommel geführt, und vor der Beschichtung wird ein Blendenband in Laufrichtung des Kunststoffbandes und quer dazu justiert an das Kunststoffband herangespult, mit diesem zusammen durch die Glimmpolymerisations zone der Prozeßkammer geführt und danach wieder weggeleitet,

c) in gleicher Weise wird räumlich getrennt dazu das Kunststoffband über eine Kühltrommel durch die Metallbeschichtungsstation geführt, wobei vor dem Eintritt in die Metallbeschichtungszone der Prozeßkammer ein Blendenband in Laufrichtung des Kunststoffbandes und quer dazu justiert an das Kunststoffband herangespult, mit diesem zusammen durch die Beschichtungs zone geführt und wieder weggeleitet wird,

d) beim nächsten Durchlauf des Kunststoffbandes, das nun bereits eine Anordnung von Metallflächen und eine Anordnung von Isolierstoffflächen je Schichtstruktureinheit aufweist, durch die Metallbeschichtungszone werden die nun aufzutragenden Metallflächen gegenüber den ersten Metallflächen versetzt abgeschieden,

e) nach dem Erreichen der gewünschten Zahl von Isolierstoffflächen mit dazwischengefügten Metallflächen wird das Kunststoffband in die einzelnen Schichtstrukturen durch Aufteilung in Längs- und Querrichtung getrennt.

Zum Herstellen von elektrischen Schichtkondensatoren, die aus auf einer Unterlage aus Isolierstoff übereinander angeordneten abwechselnd Metallschichten der Beläge und Isolierschichten als Dielektrikum darstellenden Schichten bestehen, wobei die Metallschichten jeweils des einen Belages auf einer Seite des Kondensators und die des anderen Belages auf einer anderen Seite des Kondensators über die Dielektrikumsschichten vorstehen und die vorstehenden Randbereiche der Metallschichten der Beläge ohne dazwischenliegenden Isolierstoff aufeinander angeordnet sind und die so gebildeten Randbereiche der Beläge mit Anschlußelementen elektrisch leitend verbunden sind und bei dem die Unterlage im Bereich der Randbereiche der Beläge Stirnflächen aufweist, die auf zwei voneinander getrennten Seiten mit Metallschichten überzogen sind, ist dieses Verfahren erfindungsgemäß dadurch gekennzeichnet, daß im Verfahrensschritt d) die aufzutragen, als Belegungen des Kondensators dienenden Metallflecke gegenüber den vorher aufgetragenen Metallflecken alternierend gegeneinander versetzt abgeschieden werden.

Die Versetzung kann dabei quer zur Laufrichtung oder in Laufrichtung des Kunststoffbandes erfolgen, oder die Metallflecke können gegenüber den vorher aufgetragenen Metallflecken schräg zur Laufrichtung des Kunststoffbandes versetzt abgeschieden werden.

Ferner ist es vorteilhaft, wenn das mit den Schichtstrukturen versehene Kunststoffband in einem weiteren Verfahrensschritt mit wenigstens einer Schicht versehen wird, die später als Decklage zum Schutz und zur Isolation dient.

Für die Herstellung von elektrischen Bauelementen in Chipbauweise wird das mit den einzelnen Schichtstrukturen versehene Kunststoffband von beiden Seiten her mit als Schutzumhüllung dienendem Kunststoff versehen.

Ferner ist es vorteilhaft, das mit den einzelnen Schichtstrukturen versehene Kunststoffband zunächst in einzelne Streifen aufzuteilen, die an den Schnittkanten endenden, alternierend in der Schichtstruktur angeordneten Metallflecken mit Stromzuführungselementen zu versehen und danach die Streifen in die einzelnen Schichtstrukturen aufzutrennen.

Die Vorrichtung der eingangs angegebenen Art ist zur Lösung der Aufgabe gekennzeichnet durch die Merkmale:

a) die Transporteinrichtung besteht aus einem umlaufenden Kunststoffband, das später in aufgeteilter Form die Unterlagen für die herzustellenden Schichtstrukturen darstellt, ferner aus zwei Kühltrommeln, die je in einer der Stationen zur Glimmpolymerisation bzw. zur Metallbeschichtung untergebracht sind,

b) die Polymerisationsstation ist evakuierbar und enthält eine Prozeßkammer für die Glimmpolymerisation und ein zwischen dem auf der Kühltrommel umlaufendes Kunststoffband und der Prozeßkammer verlaufendes Blendenband,

c) die Metallbeschichtungsstation ist ebenfalls evakuierbar und enthält eine Prozeßkammer für die Metallbeschichtung und ein zuspulbares Blendenband, das über Führungsrollen geführt ist,

d) die Führungsrollen sind mit Stacheln versehen, die exakt positioniert sind,

e) das Kunststoffband oder das Blendenband enthalten wenigstens eine zur Justierung dienende Perforation mit einer ungeraden Zahl von Perforationslöchern,

f) das Blendenband oder das Kunststoffband enthalten korrespondierend zum jeweils anderen Band ebenfalls wenigstens eine zur Justierung dienende Perforation mit einer geraden Anzahl von Perforationslöchern,

g) die Stacheln der Führungsrollen greifen in die Perforationslöcher sowohl des Blendenbandes als auch in die Perforationslöcher des Kunststoffbandes ein und gewährleisten eine exakte Justierung der beiden Bänder zueinander.

Vorzugsweise sind das Kunststoffband und das Blendenband in der Polymerisationsstation in gleicher Weise durch Führungsrollen mit Stacheln justierbar.

Hierdurch wird die an sich schon in der Metallbeschichtungsstation bewirkte Zentrierung und die Justierung des Kunststoffbandes noch weiter verbessert.

Es ist vorteilhaft, wenn in der Polymerisationsstation das Blendenband aus einzelnen parallel zueinander laufenden Teilbändern besteht, weil hierdurch beispielsweise das Abscheiden des als Isolierstoffschichten dienenden Kunststoffmaterials in Längsstreifen an den gewünschten Stellen abgeschieden werden kann.

Die Stacheln auf den Führungsrollen in der Metallbeschichtungsstation und/oder der Polymerisationsstation sind vorteilhafterweise in Form von Vierkantpyramiden ausgebildet.

Dabei ist es vorteilhaft, wenn der Grundquerschnitt der Stacheln der in Ablaufrichtung ersten Führungsrolle dem Querschnitt der Perforationslöcher des Blendenbandes und des Kunststoffbandes entspricht, während der Grundquerschnitt der Stacheln der in Ablaufrichtung zweiten Führungsrolle quer zur Laufrichtung schmaler ist als der Grundquerschnitt der Stacheln der ersten Führungsrolle, d.h., daß der Grundquerschnitt der Stacheln bei quadratischem Querschnitt der Perforationslöcher des Blenden- und des Kunststoffbandes rechteckförmig ist, wobei die längere Seite des Rechteckes quer zur Laufrichtung liegt.

Dies ist deshalb von Vorteil, weil bei gleichem bzw. nahezu gleichem Querschnitt des Grundrisses der Stacheln der ersten Führungsrolle und der Perforationslöcher im Blenden- und Kunststoffband an dieser Stelle die Justierung zwischen Blendenband und Kunststoffband sowohl in Längs- als auch in Querrichtung erfolgt, während durch die Stacheln der zweiten Führungsrolle nur eine Justierung in Querrichtung zwischen Blendenband und Kunststoffband eintritt und dabei Spannungen in Längsrichtung vermieden werden, die beispielsweise durch die Dickenzunahme infolge des Abscheidens der vielen Schichten resultieren.

Es ist offensichtlich und für den Fachmann erkennbar, daß die Form der Stacheln auch in umgekehrter Reihenfolge realisiert sein kann.

Wenn in der Polymerisationsstation ein Blendenband mit einzelnen Öffnungen verwendet wird, so ist es vorteilhaft, diese Öffnungen hinsichtlich ihrer Position stets in gleicher Weise ohne seitliche Versetzung den Perforationslöchern im Kunststoffband zuzuordnen, weil die durch diese Öffnungen erzeugten Isolierstoffschichten in der fertigen Schichtstruktur ohne irgendwelche seitliche Versetzung übereinander angeordnet sein sollen.

Im Gegensatz hierzu sind die Öffnungen im Blendenband der Metallbeschichtungsstation unterschiedlich angeordnet, wobei eine Gruppe von Öffnungen in Querrichtung den ungeradzahligen Perforationslöchern und die nächste Gruppe von Öffnungen den geradzahligen Perforationslöchern zugeordnet sind, so daß durch die ungerade Anzahl von Perforationslöchern im Kunststoffband bei jedem Umlauf desselben durch beide Beschichtungsstationen stets eine Versetzung der Metallflächen von Lage zu Lage erfolgt.

Für gewisse Anwendungsfälle, beispielsweise bei Schichtstrukturen mit einer sehr hohen Anzahl übereinander anzuordnender Schichten, ist es vorteilhaft, wenn wenigstens eines der beiden Blendenbänder als endlos umlaufendes Band ausgebildet ist und mit einer Reinigungsvorrichtung zur Säuberung von Beschichtungsmaterial in Berührung steht.

Durch die Erfindung werden folgende Vorteile erzielt:
- Die Trennung der Unterdruckstufen des Polymerisationsbereiches und des Metallbeschichtungsbereiches wird gegenüber den mit einer umlaufenden Trommel arbeitenden Verfahren und Anlagen vereinfacht.
- Durch die insbesondere kontinuierlichen, d.h. endlosen Blendenbänder, die in der Metallbeschichtungsstation und in der Polymersiationsstation je als ein getrenntes Band vorhanden sind, erfolgt eine nach Prozessen getrennte und damit saubere Beschichtung des umlaufenden Trägerbandes. Die Profile der Öffnungen in den Blendenbändern können für den jeweiligen Prozeß optimiert ausgelegt werden.
- Durch das Spannen der Blendenbänder über die durch die Kühltrommel gewölbte Oberfläche des umlaufenden Kunststoffbandes entfällt das aufwendige Niederhaltesystem bei einer Reihe der bisher bekannten Anlagen, wofür stets ein großer Platzbedarf erforderlich war, so daß durch die Erfindung die Flächennutzung erhöht wird.
- Da gemäß der Erfindung nun Blendenbänder mit geringerer Dicke verwendet werden können, erhöht sich auch die optimale Abscheidungsrate bei konstanterer Schichtdicke der abzuscheidenden Schichten.

- Durch den Einsatz eines umlaufenden Kunststoffbandes, das später als Träger für die Schichtstrukturen dient, werden der Substratwechsel und die Anlagenreinigung vereinfacht, wobei auch das zeitaufwendige Entnehmen und Umsortieren der Substratstäbchen, die bisher verwendet wurden und sich als einzige Möglichkeit für diesen Zweck in der Praxis bewährt haben, entfällt.

- Durch eine ungeradzahlige Teilung der Perforationslöcher am umlaufenden Kunststoffband und alternierend versetzte Ausschnitte im Blendenband der Metallbeschichtungsanlage wird die seitliche Verschiebung der einzelnen Metallschichten von Lage zu Lage ohne zusätzlichen Aufwand bewirkt. Die bisher notwendige und im Vakuum sehr störanfällige Versatzmechanik entfällt vollkommen.

- Als Substrat kann eine handelsübliche Polyimidfolie eingesetzt werden, wodurch die teure Herstellung der Stäbchen aus Polyphenylensulfid (PPS) entfällt.

- Die Blendenbänder können auf eine Dicke von ca. 0,05 mm reduziert werden, wodurch insbesondere bei der Glimmpolymerisation (Plasmapolymerisation) die Schichtdicke des abgeschiedenen Dielektrikums gleichmäßiger und die Abscheiderate wesentlich höher wird. Durch diese Verbesserung und den Wegfall des dicken Niederhaltesystems bei den bisher für diese Zwecke eingesetzten Anlagen können nun auch die Ausschnitte in den Blendenbändern kleiner und enger nebeneinander positioniert werden. Dadurch werden kleinere Abmessungen der einzelnen Schichtstrukturen und eine Erhöhung der Anzahl derselben pro Substratfolie und -fläche möglich.

- Die Länge der Trennspalte der Vakuumschleusen einerseits zwischen der Glimmpolymerisationsstation und der Ausgleichskammer und andererseits zwischen der Ausgleichskammer und der Metallbeschichtungsstation sind nicht mehr vom Trommelumfang abhängig und können nun entsprechend der Foliengeometrie und Beschichtungsdicke (Lagenzahl beispielsweise der Rohkondensatoren) in der Querschnittsform und Spaltlänge ausgelegt werden. Dadurch wird die maximale Lagenzahl, die bei den gegenwärtig arbeitenden Anlagen etwa 150 beträgt, nicht mehr durch die Trennspalte bzw. Dichtspalte begrenzt.

- Es ist jetzt möglich, prozessbezogene Blendenbänder im Umspulverfahren einzusetzen, wodurch nur gereinigte Blendenbänder dem Beschichtungsprozeß zugeführt werden. Bei endlos umlaufenden Blendenbändern kann eine Reinigung derselben beispielsweise außerhalb der Beschichtungskammern in den Verfahrensablauf zwischengeschaltet werden. Ein Verschmutzen der herzustellen Schichtstrukturen, insbesondere der aktiven Kondensatoren, durch abbröckelndes Beschichtungsmaterial wird dadurch vermieden.

- Das Herstellen der Schichtstrukturrohlinge und auch die weitere Verarbeitung, beispielsweise Umpressen mit einer Schutzumhüllung und Herstellen der Außenkontaktierung durch weiteres Sputtern braucht nun nicht mehr durch die Handhabung diskreter einzelner Bauteile vorgenommen zu werden, sondern dies kann auf dem als Substrat dienenden Trägerband erfolgen.

Für die Herstellung der Metallschichten eignet sich jedes Verfahren, bei dem im Hochvakuum auf einem gekühlten Trägerkörper Metallschichten abgeschieden werden. Derartige Verfahren sind bekannt. Es gehören hierzu beispielsweise die Beschichtung mittels Metall aus der Dampfphase (Aufdampfen), die Beschichtung mittels Metall durch Kathodenzerstäubung (auch als Sputter-Verfahren bezeichnet) und das Beschichten mittels Metall durch Ionenplattieren (ion plating).

Für die Herstellung der Isolierstoffschichten eignen sich Verfahren, die ebenfalls bekannt sind und bei denen aus Kunststoffmaterial, das monomer oder niedrig molekular in Gasform vorliegt, durch Glimmpolymerisation hoch- oder höherpolymerisierte Kunststoffschichten entstehen (vgl. z.B. die DE-PSen 21 05 003, 23 02 174, 23 02 190, 30 20 815; EP-B 0 097 945).

Aus einem Vergleich zwischen den bisher bekannten Verfahren (vgl. die oben bereits diskutierten DE-PSen 28 47 620 und 29 00 724), die sich in der Technik solcher Schichtstrukturen, insbesondere solcher elektrischer Kondensatoren, eigentlich als einzige durchgesetzt haben und bei denen die Schichtstrukturen praktisch einzeln hergestellt werden, mit dem Verfahren der Erfindung wird die Überlegenheit desselben deutlich.

Bei den bekannten Verfahren sind folgende Verfahrensschritte erforderlich:

- Spritzgießen der Substrate, der Böden und der Deckel,

- Stanzen der Blenden,

- Einlegen der Substrate in Trägerplatten,

- Einbau der Trägerplatten und Kassetten,

- Montieren von Blenden und Niederhaltern,

- Einbau der Kassetten in die Nischen der Trommel der Beschichtungsanlage bzw. in einzelne Förderkörbe derselben,

- Herstellen der Isolierschichten durch Glimmpolymerisation und Herstellen der Metallschichten durch Sputterverfahren,

- Wechseln der Trommeln bzw. der Transportbehälter,

- Entnahme der Kassetten und weitere Entnahme der Trägerplatten aus demselben,

- Tempern der Rohkondensatoren,

- Beschichtung der Kondensatoren auf dem Substrat in Siebdruckverfahren,

- Verkleben und Aushärten der Böden und Deckel miteinander, um ein SMD-Bauelement (Surface Mounted Device) zu erhalten,
- Umordnen der SMD-Bauelemente in Sputterrahmen,
- beidseitiges Sputtern zur Herstellung der äußeren Stromzuführungen,
- Umsortieren, Aufschließen, Prüfen, Vereinzeln und Verpacken der fertigen Bauelemente.
- Bei Wiederverwendung müssen die Trägerplatten gereinigt werden, und ebenso müssen bei Wiederverwendung die Kassetten, Blenden und Niederhalter gereinigt werden.

Beim Verfahren der Erfindung sind dagegen nur folgende Verfahrensschritte erforderlich:
- Stanzen der Trägerfolie, die als umlaufendes Kunststoffband eingesetzt wird,
- Stanzen der Blendenbänder,
- Einlegen des umlaufenden Kunststoffbandes und der Blendenbänder in die Beschichtungsanlage,
- Herstellen der Isolierschichten durch Glimmpolymerisation und der Metallschichten durch Sputter-Verfahren,
- Entnahme des mehrfach beschichteten umlaufenden Kunststoffbandes (Trägerfolie),
- Tempern der darauf befindlichen Rohlinge der Schichtstrukturen,
- Umspritzen bzw. Umpressen der Rohlinge noch auf der Trägerfolie,
- Aufteilen der Trägerfolie in Längsstreifen und Verwickeln derselben mit einem Abdeckband,
- Herstellen der äußeren Stromzuführungen durch beidseitiges Sputtern,
- Abwickeln, Aufschließen, Prüfen, Vereinzeln und Verpacken der fertigen Bauelemente.
- Das für diese letzten Vorgänge zu verwendende Abdeckband muß bei Wiederverwendung gereinigt werden.

Die Erfindung wird nachfolgend anhand von Ausführungsbeispielen näher erläutert, wobei hier die Herstellung von Schichtkondensatoren als bevorzugtes Beispiel dargestellt ist.

Es zeigen:

FIG 1 eine Draufsicht auf einen Längsschnitt durch die Vorrichtung;

FIG 2 einen Schnitt längs der Linie II - II durch die Schleuse 3 in FIG 1;

FIG 3 eine Vergrößerung eines der in FIG 2 gezeigten Durchgänge mit darin befindlicher Schichtstruktur, und zwar schematisch für nur eine Schichtstruktur;

FIG 4 bis 9 Kunststoffband und Blendenbänder sowie einen einzelnen Kondensator zur Erläuterung des Verfahrens;

FIG 10 einen Ausschnitt aus einem teilweise beschichteten Kunststoffband;

FIG 11, 12 eine Schichtschaltung als R-C-Netzwerk;

FIG 13, 14 eine Schichtstruktur mit einem Kondensator, einem Widerstand und einer Induktion;

FIG 15 einen Ausschnitt aus FIG 1 im Hinblick auf die Metallbeschichtungsstation;

FIG 16 einen Ausschnitt aus dem Randbereich des mit Perforationslöchern versehenen Kunststoffbandes.

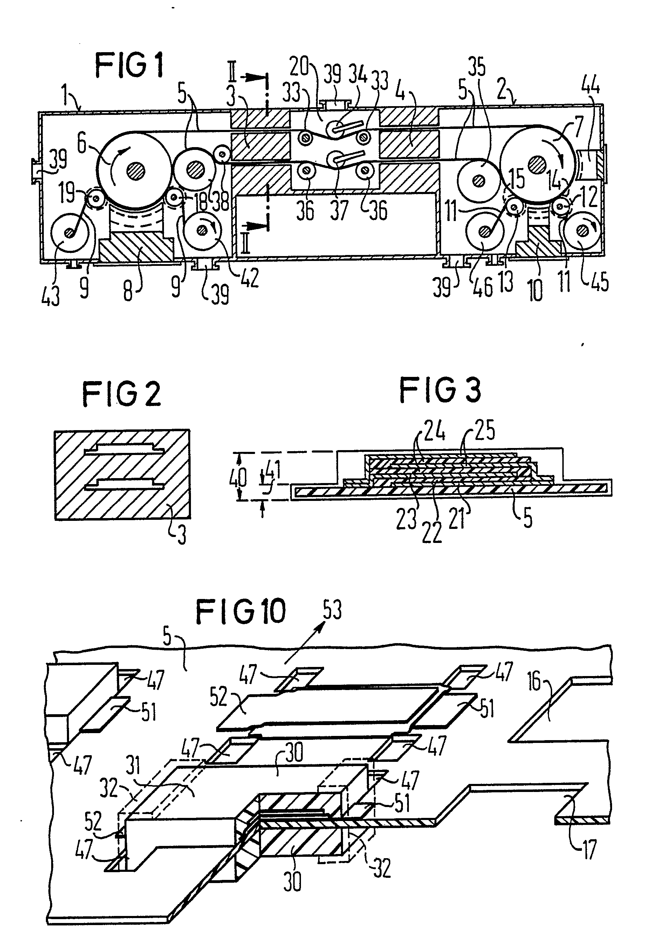

Die in FIG 1 gezeigte Vorrichtung besteht aus einer Station 1 für die Glimmpolymerisation und einer Station 2 für die Metallbeschichtung. Die Stationen 1 und 2 sind voneinander durch die Vakuumschleuse 3 zwischen der Station 1 und einer Trennkammer 20 und die Vakuumschleuse 4 zwischen der Trennkammer 20 und der Station 2 voneinander getrennt.

Das endlose Kunststoffband 5 läuft in der Station 1 über die Kühltrommel 6, durch den oberen Durchgang der Schleuse 3 über die Auflagerollen 33 und gespannt durch die Spannrolle 34 durch den oberen Durchgang durch die Schleuse 4 in die Station 2, dort um die Kühltrommel 7 herum über die Führungsrolle 35 durch den unteren Durchgang der Schleuse 4 über die Auflagerollen 36 und gespannt durch die Spannrolle 37 durch den unteren Durchgang der Schleuse 3 zurück in die Station 1. Geführt durch das Rollenpaar 38 gelangt das endlose Band 5 wieder auf die Kühltrommel 6.

Die Kühlung der Kühltrommeln 6 und 7 erfolgt vorzugsweise mittels Kühlflüssigkeit, insbesondere mit Wasser.

Der Antrieb des endlosen Kunststoffbandes 5 erfolgt durch die synchron rotierenden Trommeln 6 und 7. Die Auflagerollen 33 und 36 und die Spannrollen 34 und 37 haben dabei nur die Aufgabe, das Kunststoffband 5 straff und gleichmäßig durch die Durchgänge der Schleusen 3 und 4 zu führen und auf den Kühltrommeln 6 und 7 zu halten.

Der Querschnitt der lichten Weite der Durchgänge durch die Schleusen 3 und 4 ist in den FIG 2 und 3 schematisch dargestellt. Diese Querschnitte sind so geformt, daß die aufgebrachten Schichten nicht beschädigt werden können, wobei aber die unterschiedlichen Druckverhältnisse in den Stationen 1 und 2 sehr genau voneinander getrennt werden können.

Das Vakuum wird in den einzelnen Stationen 1 und 2 und in der Trennkammer 20 durch die an diesen Kammern gezeigten Absaugstutzen 39 erzeugt bzw. aufrechterhalten.

In FIG 3 ist anhand einer einzelnen Schichtstruktur für einen Kondensator gezeigt, daß der Querschnitt der Durchgänge hinsichtlich ihrer Höhe 40 so weit ist, daß die Gesamtzahl der aufgebrachten Schichten eines Kondensators beschädigungslos hindurchgehen. Der Kondensator besteht aus den alternierend nach verschiedenen Seiten ausgerichteten Metallschichten 21 und 23 und den weiteren Metallschichten 25 und dem dazwischenliegenden Dielektrikum 22 und den weiteren Dielektrikumsschichten 24. Man erkennt, daß die Metallschichten 21 und 23 sowie auch die weiteren Metallschichten 25 abwechselnd zu verschiedenen Seiten der Kondensatorstruktur geführt und dort miteinander elektrisch leitend verbunden sind. Die Trägerfolie 5 ist breiter als die Schichtstruktur, wofür im Querschnitt ebenfalls eine Verbreiterung vorgesehen ist, deren Höhe 41 so bemessen ist, daß die nicht beschichteten Teile des Kunststoffbandes 5 gerade hindurchgehen.

In der Praxis sind selbstverständlich nicht nur ein Kondensator oder eine Schichtstruktur auf dem Kunststoffband 5 in Richtung quer zur Laufrichtung aufgebracht, sondern es sind, wie noch erläutert wird, eine Vielzahl solcher Strukturen vorhanden, z. B. 10 oder 20 Kondensatoren in Querrichtung bei einer Breite des Kunststoffbandes von 5 bis 10 cm und 1000 in Längsrichtung bei einer Länge des Kunststoffbandes von 5 Metern.

Nachdem das endlose Kunststoffband 5 aus der Station 2, wo es mit den ersten Metallschichten versehen worden ist, durch die Schleusen 4 und 3 wieder in die Station 1 gelangt, wird sie vom Rollenpaar 38 der Kühltrommel 6 zugeführt. Dort wird an das Kunststoffband 5 ein Blendenband 9 für die Glimmpolymerisation herangespult, das von einer Vorratsrolle 42 abgespult wird, über die erste Führungsrolle 18, dann mit dem Kunststoffband 5 zusammen durch die Prozeßkammer 8 für die Glimmpolymerisation läuft. Über die zweite Führungsrolle 19 wird das Blendenband 9 wieder vom Kunststoffband 5 weggespult und auf die Vorratsrolle 43 geleitet.

Die Blendenbänder 9 und/oder 11 können auch als endlos umlaufende Bänder ausgebildet sein, wobei diese dann entweder stets in den Stationen 1 oder 2 umlaufen oder aber aus diesen durch Vakuumschleusen herausgeführt, gereinigt und wieder hineingeleitet werden.

Die Prozeßkammer 8 für die Glimmpolymerisation kann in bekannter Form ausgeführt sein und ist mit einem Einlaß für das monomere oder niedrigmolekulare Kunststoffmaterial und mit einer Elektrode für die Glimmpolymerisation versehen. Die andere Elektrode für die Glimmpolymerisation wird durch die Kühltrommel 6 gebildet.

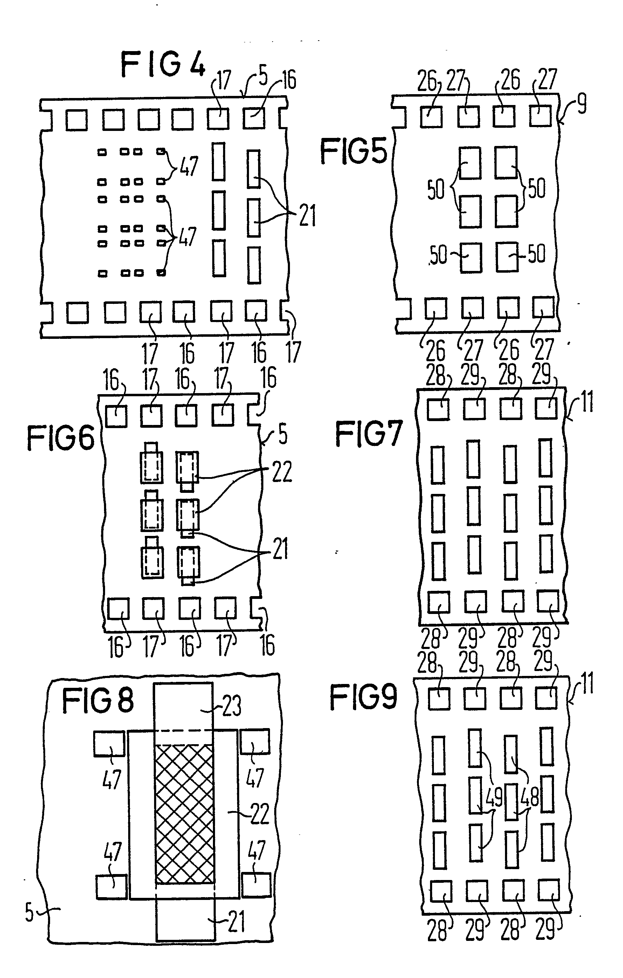

Der Ablauf der Vorgänge in der Station 1 für die Glimmpolymerisation wird weiter unten im Zusammenhang mit den FIG 4 bis 9 näher erläutert.

Das nun mit ersten Metallschichten und ersten Isolierstoffschichten für die einzelnen Schichtstrukturen versehene Kunststoffband 5 verläßt die Station 1 und gelangt durch die Schleusen 3 und 4 wieder auf die Kühltrommel 7 der Station 2 für die Metallbeschichtung. Mit 44 ist eine Einrichtung bezeichnet, die zur Reinigung des Kunststoffbandes 5 vor der Metallbeschichtung dient. Nach diesem Reinigungsvorgang (auch Ätzvorgang bezeichnet) wird an das Kunststoffband 5 ein Blendenband 11 herangespult, das von der Vorratsrolle 45 abgewickelt und über die erste Führungsrolle 12 geleitet wird.

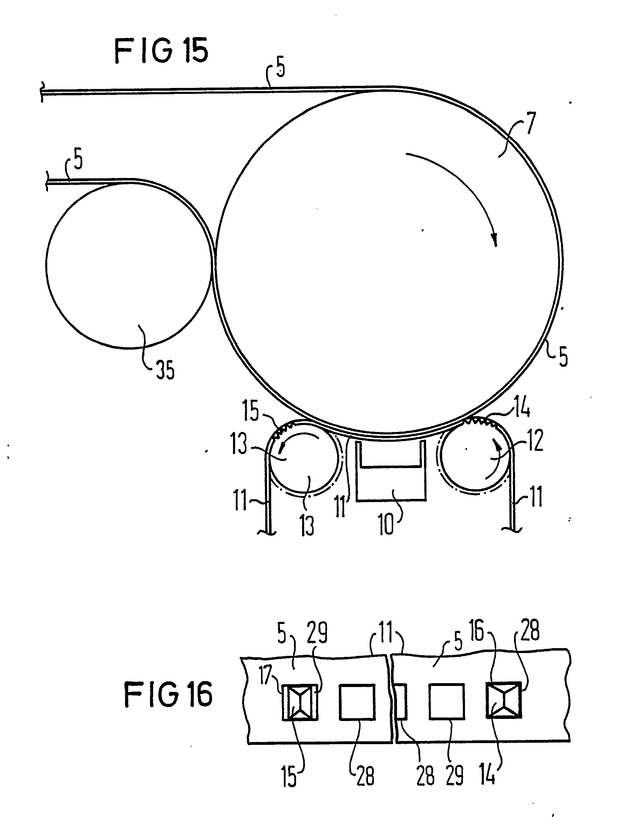

In FIG 15 ist gezeigt, daß sowohl die erste Führungsrolle 12 als auch die zweite Führungsrolle 13 mit Stacheln 14 bzw. 15 versehen ist, die, wie aus FIG 16 hervorgeht, in Perforationslöcher 16, 17, 28, 29 eingreifen und in Form von Vierkantpyramiden ausgebildet sind. Die Stacheln 14 der Führungsrolle 12 haben dabei einen beispielsweise quadratischen Querschnitt, der den Perforationslöchern 16 bzw. 28 und 17 bzw. 29 des Kunststoffbandes 5 und des Blendenbandes 11 entspricht. Die Stacheln 15 der Führungsrolle 13 sind ebenfalls in Form von Vierkantpyramiden ausgebildet, jedoch ist der Querschnitt in Nähe der Führungsrolle so gestaltet, daß bei einem Rechteck die Längsseite quer zur Transportrichtung liegt, so daß die Perforationslöcher nur in Richtung quer zur Transportrichtung zur Deckung gebracht werden. Durch die Stacheln 14 der Führungsrolle 12 werden die Perforationslöcher des Blendenbandes 11 und des Kunststoffbandes 5 so wohl quer als auch längs zur Transportrichtung zur Deckung gebracht. Derartig justiert und zentriert miteinander in Verbindung gebracht, gelangen das Kunststoffband 5 und das Blendenband 11 in die Prozeßkammer 10 für die Metallbeschichtung, und nach der Metallbeschichtung wird das Blendenband 11 über die zweite Führungsrolle 13 vom Kunststoffband 5 weggespult und auf die Vorratsrolle 46 aufgewickelt. Über die Führungsrolle 35 wird das Kunststoffband 5 wieder in den unteren Durchgang der Schleuse 4, durch die Trennkammer 20 und den unteren Durchgang der Schleuse 3 wieder in die Station 1 für die Glimmpolymerisation geleitet.

Auch die Prozeßkammer 10 ist in bekannter Weise ausgebildet. So ist darin entweder ein elektrisch beheiztes Verdampferschiffchen mit dem abzuscheidenden Metall enthalten oder es ist eine Kathode aus dem abzuscheidenden Metall angeordnet, wobei dann die Kühltrommel 7 die Gegenelektrode darstellt.

Der Vorgang wird so oft wiederholt, bis die erforderliche Anzahl von Metallschichten und Isolierstoffschichten auf dem Kunststoffband 5 aufgetragen sind.

Anhand der FIG 4 bis 9 soll nun der Ablauf des Verfahrens erläutert werden.

In den FIG 4 und 6 ist das Kunststoffband 5 als Ausschnitt gezeigt, das in diesem Falle an beiden Randseiten mit Perforationslöchern 16 und 17 versehen ist. Der Querschnitt dieser Perforationslöcher ist quadratisch.

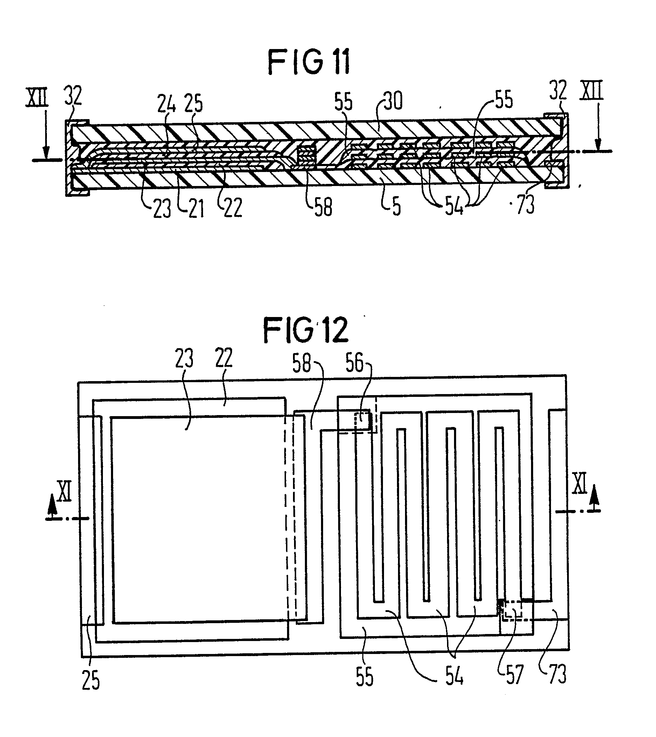

Ferner ist in FIG 4 noch gezeigt, daß das Kunststoffband 5 selbstverständlich über seine gesamte Länge mit weiteren Durchbrüchen 47 in bestimmter Anordnung versehen ist. Die Bedeutung dieser Durchbrüche 47 wird anhand der FIG 8 und 10 später erläutert.

Beim ersten Umlauf wird das Kunststoffband 5 mit dem Blendenband 11 gemäß FIG 9 derart in Verbindung gebracht, daß die Perforationslöcher 28 mit den Perforationslöchern 16 und die Perforationslöcher 29 mit den Perforationslöchern 17 zur Deckung gelangen, und zwar durch die Stacheln 14 und 15 auf den Führungsrollen 12 und 13.

Derartig vom Blendenband 11 abgedeckt, gelangt das Kunststoffband 5 in die Prozeßkammer 10 und wird dort mit Metall beschichtet, das durch die Öffnungen 48 und 49 im Blendenband 11 auf das Kunststoffband 5 gelangt. Dadurch entstehen die ersten Metallflächen 21 (FIG 4). Man erkennt in FIG 9, daß die Gruppe von Öffnungen 48 im Blendenband 11 den geradzahligen Perforationslöchern 28 und die Gruppe von Öffnungen 49 den ungeradzahligen Perforationslöchern 29 zugeordnet sind, wobei die Öffnungen 48 etwas in Richtung auf den unteren Rand des Kunststoffbandes 5 und die Öffnungen 49 etwas in Richtung auf den oberen Rand des Kunststoffbandes 5 versetzt sind. Diese seitliche Versetzung liegt demzufolge auch bei den ersten Metallschichten 21 gemäß FIG 4 vor.

In der Station 1 für die Glimmpolymerisation wird dem so vorbereiteten und mit ersten Metallflächen 21 versehenen Kunststoffband das Blendenband 9 gemäß FIG 5 zugspult, das ebenfalls an beiden Rändern mit quadratischen Perforationslöchern 26 und 27 versehen ist. Das Blendenband 9 ist über seine gesamte Arbeitsfläche mit Öffnungen 50 versehen, die im Gegensatz zum Blendenband 5 seitlich nicht versetzt sind. Durch die Glimmpolymerisation in der Prozeßkammer 8 werden durch die Öffnungen 50 im Blendenband 9 hindurch die ersten Isolierstoffflächen 22 erzeugt, wie dies in FIG 6 dargestellt ist.

Da, wie oben beschrieben, das endlose Kunststoffband 5 in Bewegungsrichtung mit einer ungeraden Zahl von Perforationslöchern 16 und 17 versehen ist, gelangen beim nächsten Durchgang durch die Station 2 für die Metallbeschichtung die geradzahligen Perforationslöcher 16 des Kunststoffbandes unter die ungeradzahligen Perforationslöcher 29 des Blendenbandes 11, während die ungeradzahligen Perforationslöcher 17 des Kunststoffbandes 5 unter die geradzahligen Perforationslöcher 28 des Blendenbandes 11 geraten. Durch die vierkantpyramidenförmigen Stacheln 14 bzw. 15 der Führungsrollen 12 bzw. 13 werden das Blendenband 11 und das Kunststoffband 5 sowohl in Längs- als auch in Querrichtung zentriert und justiert.

Bei der derartig vorbereiteten Zusammenstellung von Blendenband 11 und Kunststoffband 5 entstehen bei der Metallbeschichtung nunmehr die zweiten Metallflächen 23, die gegenüber den ersten Metallflächen 21 seitlich derart versetzt sind, daß sie, wie in FIG 8 dargestellt ist, an gegenüberliegenden Seiten die erste Isolierstofffläche 22 überragen.

Auf diese Schichtstruktur werden nun in der Station 1 für die Glimmpolymerisation durch Zusammenführung des Blendenbandes 9 mit dem Kunststoffband 5 die weiteren Isolierstoffflächen 24 (vgl. FIG 3) abgeschieden und dann in der Station 2 für die Metallbeschichtung die weiteren Metallflächen 25 erzeugt.

Dieser Ablauf wird so oft wiederholt, bis die gewünschte oder erforderliche Zahl von Metallschichten und Isolierstoffschichten aufgetragen ist, es können mehr als 300 Umläufe erfolgen.

Danach wird die gesamte Anlage vorsichtig belüftet, und nach Druckausgleich wird das mit den Schichtstrukturen versehene Kunststoffband entnommen.

Dieses Band wird nun der Weiterbehandlung unterworfen, wobei zunächst eine Temperung erfolgen kann und danach Isolierumhüllungen hergestellt werden.

Dies soll anhand der FIG 8 und 10 dargestellt werden.

Die im Kunststoffband 5 befindlichen Öffnungen 47 sind so angeordnet, daß sie etwa an den vier Ecken der Isolierstofffläche 22 liegen. Das ergibt die Möglichkeit (vgl. FIG 10), das Kunststoffband 5 sowohl von unten als auch von oben mit Deck lagen 30 zu versehen, die durch die Öffnungen 47 miteinander verbunden sind und damit eine insgesamt mechanisch feste und feuchtesichere Schutzumhüllung 31 ergeben.

Man erkennt in FIG 10, daß innerhalb der Schutzumhüllung 31 die Schichtstrukturen vorhanden sind, und daß an gegenüberliegenden Seiten Metallflächen 51 und 52 aus der Isolierumhüllung 31 herausragen. Diese Metallflächen dienen der Außenkontaktierung der Schichtstruktur, hier des elektrischen Kondensators.

Das so vorbereitete Kunststoffband 5 kann nunmehr in die einzelnen elektrischen Bauelemente, hier die elektrischen Kondensatoren, aufgeteilt werden.

Dies kann einerseits dadurch geschehen, daß die einzelnen Bauelemente je für sich von der Folie abgetrennt werden, es kann aber vorzugsweise dadurch geschehen, daß das Kunststoffband 5 in Längsrichtung in einzelne Streifen aufgeteilt wird, an denen dann durch seitliche Metallbeschichtung weitere äußere Stromzuführungen 32 angebracht werden, beispielsweise für die Verwendung dieser Bauelemente als Chip-Bauteile für die Montage auf der Oberfläche gedruckter Schaltungen. Danach kann die Aufteilung dieser Längsbänder in die einzelnen Kondensatoren oder in die einzelnen Schichtstrukturen erfolgen.

Durch die Erfindung können mit dem Verfahren und mit der Vorrichtung aber nicht nur elektrische Kondensatoren hergestellt werden, sondern es ist auch möglich, andere Schichtstrukturen aufzubauen.

So zeigen die FIG 11 und 12 ein Widerstands-Kondensator-Netzwerk (R-C-Netzwerk), wobei FIG 11 einen Schnitt längs der Linie XI - XI in FIG 12 und FIG 12 eine Draufsicht auf einen Schnitt längs der Linie XII - XII in FIG 11 darstellt.

An der linken Seite der Darstellung ist auf dem als Trägerfolie dienenden Kunststoffband 5 der Kondensator aufgebaut, analog dem in FIG 3 dargestellten Kondensator. Die erste Metallfläche 21 befindet sich unmittelbar auf dem Kunststoffband 5, darüber ist die erste Isolierstofffläche 22 angeordnet, darüber wiederum, diesmal jedoch nach rechts seitlich versetzt, die zweite Metallfläche 23 und darüber - wie oben beschrieben - die weiteren Isolierstoffflächen 24 und die weiteren Metallflächen 25. Die gleichpoligen Metallflächen sind nach links bzw. nach rechts versetzt und dort elektrisch miteinander verbunden.

Auf der rechten Seite der Darstellung ist ein elektrischer Widerstand in Form mäanderförmiger Metallstreifen 54 aufgetragen, die von Lage zu Lage durch Isolierstoffflächen 55 voneinander getrennt sind.

Durch diese Isolierstoffflächen 55 hindurch sind jeweils Ende und Anfang der einzelnen mäanderförmigen Metallstreifen 54 miteinander elektrisch durch alternierend links oben und rechts unten vorhandene Durchkontaktierungen 56 und 57 verbunden, so daß im vorliegenden Fall sich die Längen der drei Mäander der drei Lagen addieren. Diese Durchkontaktierungen 56 und 57 entstehen durch eine entsprechende Wahl der Öffnungen in den bei der Herstellung zu verwendenden Blenden für die Glimmpolymerisation und die Metallbeschichtung.

Von der Durchkontaktierung 56 verläuft eine durch Mehrfachabscheidung entstandene Verbindungsleitung 58, durch die der Widerstandteil mit der Metallfläche 23 des Kondensators elektrisch leitend verbunden ist.

In FIG 12 sind aus Gründen der Übersichtlichkeit die äußeren Stromzuführungselemente 32, links zum Kondensator und rechts zum Widerstand über die Zuleitungen 25 bzw. 73 sowie die Schraffierungen weggelassen worden.

Die FIG 11 und 12 zeigen, daß bei entsprechender Wahl der Öffnungen in den Blendenbändern für die Glimmpolymerisation und für die Metallbeschichtung derartige R-C-Netzwerke auf einfache Weise in großer Stückzahl hergestellt werden können. Falls man für den Kondensator mehr Schichten auftragen muß als für die Widerstandsbahnen des Widerstandsteiles, so erfolgt dies dadurch, daß für letztere bei der Metallabscheidung kein weiters Metall mehr aufgetragen wird, indem an diesen Stellen in dem Blendenband für die Metallbeschichtung keine Öffnungen mehr vorhanden sind.

In FIG 11 ist außerdem eine Decklage 30 gezeigt, die nach den Beschichtungsvorgängen mit den Mehrschichtstrukturen verbunden wird. Es ist selbstverständlich, daß auch hier eine Umhüllung zur Isolation und zum mechanischen Schutz in der Weise hergestellt werden kann, wie es bei FIG 10 beschrieben ist.

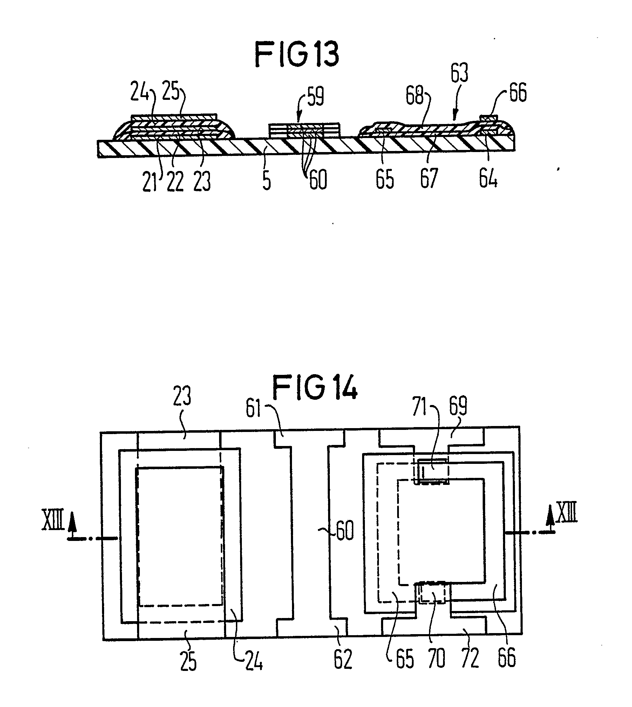

Die FIG 13 und 14 zeigen eine über ein bloßes R-C-Netzwerk hinausgehende Schichtschaltung, die außer einem links dargestellten Kondensator und einem in der Mitte angeordnetem Widerstandsteil 59 ferner rechts eine Spule als Induktion 63 zeigen.

Auch hier erfolgt die Herstellung durch entsprechende Wahl der Öffnungen in den jeweiligen Blendenbändern.

Man erkennt in FIG 13 wiederum die erste Metallfläche 21, die erste Isolierstofffläche 22 und die zweite Metallfläche 23, über denen die weiteren Isolierstoffflächen 24 und die weiteren Metallflächen 25 auf dem Kunststoffband 5 angeordnet sind.

Daneben befindet sich ein elektrischer Widerstand 59, der in diesem Fall aus drei gegeneinander nicht isolierten Metallstreifen 60 besteht. Diese Metallstreifen 60 besitzen an ihren Enden Verbreiterungen 61 und 62, an denen die elektrische Stromzuführung von außen erfolgt. Durch die Mehrfachabscheidung von Metall für die Streifen 60 oder die bei den FIG 11 und 12 beschriebene Mäanderform besteht die Möglichkeit, dem Widerstandswert einen gewünschten Wert zuzuordnen.

Rechts in den Figuren ist eine Induktion 63 dargestellt, die aus den Teilwindungen 64, 65 und 66 besteht.

Die Teilwindung 64 ist als erste auf das Kunststoffband 5 aufgetragen. Dann wird eine Isolierstoffschicht 67 aufgetragen, wonach die Teilwindung 65 abgeschieden wird. Über die Isolierstoffschicht 67 und die Teilwindung 65 werden eine weitere Isolierstoffschicht 68, und die Teilwindung 66 abgeschieden.

Die unterste Teilwindung 64 ist im oberen Teil der Zeichnung mit einer Anschlußfläche 69 verbunden, während im unteren Teil der Zeichnung durch die Isolierstoffschicht 67 an der Durchkontaktierstelle 70 eine Verbindung mit der Teilwindung 65 vorhanden ist.

Diese Teilwindung 65 ist im oberen Teil der Zeichnung an der Durchkontaktierstelle 71 mit der Teilwindung 66 verbunden.

Diese Durchkontaktierungen 70 und 71 werden stets wechselseitig fortgesetzt, wobei die Teilwindungen gegeneinander einmal nach links und einmal nach rechts versetzt abgeschieden werden.

Diese Vorgänge lassen sich durch entsprechende Wahl der Öffnungen in den Blendenbändern der Glimmpolymerisation und der Metallbeschichtung ohne Schwierigkeit verwirklichen.

Die oberste Teilwindung 66 ist mit der Anschlußfläche 72 verbunden.

Auf diese Weise resultiert eine schraubenlinienförmig sich nach oben fortsetzende Spule.

Die Schichtstrukturen der FIG 13 und 14 können selbstverständlich mit Decklagen 30 und/oder Isolierumhüllungen 32 versehen sein, wie dies oben erläutert ist.

Die in den FIG 13 und 14 gezeigten Konfigurationen sind zur Erläuterung der Erfindung gewählte Beispiele, die in der Praxis beliebig erweitert und abgeändert werden können. Die Verbindung mit außenliegenden Stromkreisen kann in der für gedruckte Schaltungen üblichen Weise, beispielsweise mit daran befestigten Anschlußdrähten oder mit Kappen für Chipbauformen erfolgen. Es ist auch möglich, diese gesamten Schichtstrukturen in einem Isoliergehäuse unterzubringen und die äußeren Stromzuführungen in der Weise auszugestalten, wie es bei integrierten Schaltungen allgemein üblich und bekannt ist.


Bezugszeichenliste

1 Station für die Glimmpolymerisation
2 Station für die Metallbeschichtung
3 Vakuumschleuse zwischen der Station 1 und der Ausgleichskammer 20
4 Vakuumschleuse zwischen der Ausgleichskammer 20 und der Station 2
5 umlaufendes endloses Kunststoffband
6 Kühltrommel in der Station 1
7 Kühltrommel in der Station 2
8 Prozeßkammer für die Glimmpolymerisation
9 Blendenband für die Glimmpolymerisation
10 Prozeßkammer für die Metallbeschichtung
11 Blendenband für die Metallbeschichtung
12 erste Führungsrolle für das Blendenband 11
13 zweite Führungsrolle für das Blendenband 11
14 Stacheln der Führungsrolle 12
15 Stacheln der Führungsrolle 13
16 geradzahlige Perforationslöcher im Kunststoffband 5
17 ungeradzahlige Perforationslöcher im Kunststoffband 5
18 erste Führungsrolle für das Blendenband 9

19 zweite Führungsrolle für das Blendenband 9
20 Trennkammer
21 erste Metallfläche
22 erste Isolierstofffläche
23 zweite Metallfläche
24 weitere Isolierstofffläche
25 weitere Metallfläche
26 geradzahlige Perforationslöcher im Blendenband 9
27 ungeradzahlige Perforationslöcher im Blendenband 9
28 geradzahlige Perforationslöcher im Blendenband 11
29 ungeradzahlige Perforationslöcher im Blendenband 11
30 Decklage
31 Schutzumhüllung
32 Stromzuführungselemente
33 Auflagerollen
34 Spannrolle
35 Führungsrolle
36 Auflagerollen
37 Spannrolle
38 Rollenpaar
39 Absaugstutzen
40 Höhe der Durchgänge
41 Höhe der Verbreiterung
42 Vorratsrolle für das Blendenband 9
43 Vorratsrolle für das Blendenband 9
44 Reinigung vor der Metallbeschichtung
45 Vorratsrolle für das Blendenband 11
46 Vorratsrolle für das Blendenband 11
47 Durchbrüche im Kunststoffband 5
48 Öffnungen im Blendenband 11
49 Öffnungen im Blendenband 11
50 Öffnungen im Blendenband 9
51 Metallflächen für die Außenkontaktierung
52 Metallflächen für die Außenkontaktierung
53 Längsrichtung des Kunststoffbandes 5
54 mäanderförmige Metallstreifen
55 Isolierstofffläche
56 Durchkontaktierung
57 Durchkontaktierung
58 Verbindungsleitung
59 elektrischer Widerstand
60 Metallstreifen
61 Verbreiterung
62 Verbreiterung
63 Induktion
64 Teilwindung·
65 Teilwindung
66 Teilwindung
67 Isolierstoffschicht
68 Isolierstoffschicht
69 Anschlußfläche
70 Durchkontaktierstelle
71 Durchkontaktierstelle

72 Anschlußfläche
73 Zuleitung

**Ansprüche**

1. Verfahren zur kontinuierlichen Herstellung großer Stückzahlen von Schichtstrukturen für elektrische Zwecke, insbesondere Kondensatoren, Widerstände, Induktionen oder Schichtschaltungen, bei denen auf einer isolierenden Unterlage (5) Metallschichten und Isolierstoffschichten miteinander abwechseln und die Metallschichten zu voneinander getrennten Seitenbereichen geführt sind, wobei an einer Station (1) die Isolierstoffschichten (22, 24) durch Glimmpolymerisation im Vakuum und an einer davon getrennten Station (2) die Metallschichten (21, 23) ebenfalls im Vakuum abgeschieden werden, indem auf einem umlaufenden Träger (5) die Isolierstoffschichten an durch Blenden abgedeckten Flächen erzeugt werden, wonach ebenfalls durch Blenden abgedeckt die Metallschichten abgeschieden werden und diese Vorgänge so oft wiederholt werden, bis die gewünschte Schichtzahl erreicht ist und dabei jeweils von Schicht zu Schicht die Metallschichten gegeneinander versetzt aufgetragen werden,
**gekennzeichnet** durch die Verfahrensschritte:

a) ein endloses Kunststoffband (5) aus einem Material, das später als Unterlage für die fertige Schichtstruktur dient, wird als umlaufendes Trägerband durch die Beschichtungsstationen (1, 2) geführt,

b) bei der Herstellung der Isolierstoffschichten in der Glimmpolymerisationsstation (1) wird das Kunststoffband (5) über eine Kühltrommel (6) geführt, und vor der Beschichtung wird ein Blendenband (9) in Laufrichtung des Kunststoffbandes (5) und quer dazu justiert an das Kunststoffband (5) herangespult, mit diesem zusammen durch die Glimmpolymerisationszone der Prozeßkammer (8) geführt und danach wieder weggeleitet,

c) in gleicher Weise wird räumlich getrennt dazu das Kunststoffband (5) über eine Kühltrommel (7) durch die Metallbeschichtungsstation (2) geführt, wobei vor dem Eintritt in die Metallbeschichtungszone der Prozeßkammer (10) ein Blendenband (11) in Laufrichtung des Kunststoffbandes (5) und quer dazu justiert an das Kunststoffband (5) herangespult, mit diesem zusammen durch die Beschichtungszone geführt und wieder weggeleitet wird,

d) beim nächsten Durchlauf des Kunststoffbandes (5), das nun bereits eine Anordnung von Metallflächen (21) und eine Anordnung von Isolierstoffflächen (22) je Schichtstruktureinheit aufweist, durch die Metallbeschichtungszone werden die nun aufzutragenden Metallflächen (23) gegenüber den ersten Metallflächen (21) versetzt abgeschieden,

e) nach dem Erreichen der gewünschten Zahl von Isolierstoffflächen (22, 24) mit dazwischengefügten Metallflächen (21, 23, 25) wird das Kunststoffband (5) in die einzelnen Schichtstrukturen durch Aufteilung in Längs- und Querrichtung getrennt.

2. Verfahren nach Anspruch 1 zum Herstellen von elektrischen Schichtkondensatoren, die aus auf einer Unterlage aus Isolierstoff übereinander angeordneten abwechselnd Metallschichten der Beläge und Isolierstoffschichten als Dielektrikum darstellenden Schichten bestehen, wobei die Metallschichten jeweils des einen Belages auf einer Seite des Kondensators und die des anderen Belages auf einer anderen Seite des Kondensators über die Dielektrikumsschichten vorstehen und die vorstehenden Randbereiche der Metallschichten der Beläge ohne dazwischenliegenden Isolierstoff aufeinander angeordnet sind und die so gebildeten Randbereiche der Beläge mit Anschlußelementen elektrisch leitend verbunden sind, und bei dem die Unterlage im Bereich der Randbereiche der Beläge Stirnflächen aufweist, die auf zwei voneinander getrennten Seiten mit Metallschichten überzogen sind, **dadurch gekennzeichnet, daß** im Verfahrensschritt d) die aufzutragenden, als Belegungen des Kondensators dienenden Metallflecke gegenüber den vorher aufgetragenen Metallflecken alternierend gegeneinander versetzt abgeschieden werden.

3. Verfahren nach Anspruch 2, **dadurch gekennzeichnet,** daß die Metallflecke gegenüber den vorher aufgetragenen Metallflecken quer zur Laufrichtung des Kunst stoffbandes versetzt abgeschieden werden.

4. Verfahren nach Anspruch 2, **dadurch gekennzeichnet,** daß die Metallflecke gegenüber den vorher aufgetragenen Metallflecken in Laufrichtung des Kunststoffbandes versetzt abgeschieden werden.

5. Verfahren nach Anspruch 2, **dadurch gekennzeichnet,** daß die Metallflecke gegenüber den vorher aufgetragenen Metallflecken schräg zur Laufrichtung des Kunststoffbandes versetzt abgeschieden werden.

6. Verfahren nach Anspruch 1 oder 2, **dadurch gekennzeichnet,** daß das mit den Schichtstrukturen versehene Kunststoffband (5) in einem weiteren Verfahrensschritt mit wenigstens einer Schicht als Decklage (30) versehen wird.

7. Verfahren nach Anspruch 1 oder 2, **dadurch gekennzeichnet,** daß das mit den einzelnen Schichtstrukturen versehene Kunststoffband (5) von beiden Seiten her mit als Schutzumhüllung (31) dienendem Kunststoff versehen wird.

8. Verfahren nach Anspruch 1 oder 2, **dadurch gekennzeichnet,** daß das mit den einzelnen Schichtstrukturen versehene Kunststoffband (5) zunächst in einzelne Streifen aufgeteilt wird, die an den Schnittkanten endenden, alternierend in der Schichtstruktur angeordneten Metallflecken werden mit Stromzuführungselementen versehen, wonach die Streifen in die einzelnen Schichtstrukturen aufgetrennt werden.

9. Vorrichtung zur Durchführung des Verfahrens nach einem der Ansprüche 1 bis 8, die eine Station (1) für die Glimmpolymerisation des Isolierstoffes und eine Station (2) für die Beschichtung mit Metall und zwischen diesen angeordnete Vakuumschleusen (3, 4), eine umlaufende Transporteinrichtung von der Glimmpolymerisationsstation (1) zur Metallbeschichtungsstation (2) und wieder zurück und ein Blendensystem enthält, **gekennzeichnet** durch die Merkmale:

a) die Transporteinrichtung besteht aus einem umlaufenden Kunststoffband (5), das später in aufgeteilter Form die Unterlagen für die herzustellenden Schichtstrukturen darstellt, ferner aus zwei Kühltrommeln (6, 7), die je in einer der Stationen zur Glimmpolymerisation (1) bzw. zur Metallbeschichtung (2) untergebracht sind,

b) die Polymerisationsstation (1) ist evakuierbar und enthält eine Prozeßkammer (8) für die Glimmpolymerisation und ein zwischen dem auf der Kühltrommel (6) umlaufenden Kunststoffband (5) und der Prozeßkammer (8) verlaufendes Blendenband (9), '

c) die Metallbeschichtungsstation (2) ist ebenfalls evakuierbar und enthält eine Prozeßkammer (10) für die Metallbeschichtung und ein zuspulbares Blendenband (11), das über Führungsrollen (12, 13) geführt ist,

d) die Führungsrollen (12, 13) sind mit Stacheln (14, 15) versehen, die exakt positioniert sind,

e) das Kunststoffband (5) oder das Blendenband (11) enthalten wenigstens eine zur Justierung dienende Perforation mit einer ungeraden Zahl von Perforationslöchern (16, 17, 28, 29),

f) das Blendenband (11) oder das Kunststoffband (5) enthalten korrespondierend zum jeweils anderen Band ebenfalls wenigstens eine zur Justierung dienende Perforation mit einer geraden Anzahl von Perforationslöchern (16, 17, 28, 29),

g) die Stacheln (14, 15) der Führungsrollen (12, 13) greifen in die Perforationslöcher (28, 29) sowohl des Blendenbandes (11) als auch in die Perforationslöcher (16, 17) des Kunststoffbandes (5) ein und gewährleisten eine exakte Justierung der beiden Bänder zueinander.

10. Vorrichtung nach Anspruch 9, **dadurch gekennzeichnet**, daß das Kunststoffband (5) und das Blendenband (9) in der Polymerisationsstation (1) in gleicher Weise durch Führungsrollen (18, 19) mit Stacheln justierbar sind.

11. Vorrichtung nach Anspruch 9, **dadurch gekennzeichnet**, daß in der Polymerisationsstation (1) das Blendenband (9) aus einzelnen parallel zueinander laufenden Teilbändern besteht.

12. Vorrichtung nach Anspruch 9, **dadurch gekennzeichnet**, daß die Stacheln (14, 15) auf den Führungsrollen (12, 13, 18, 19) in Form von Vierkantpyramiden ausgebildet sind.

13. Vorrichtung nach Anspruch 12, **dadurch gekennzeichnet**, daß der Grundquerschnitt der Stacheln (14) der in Ablaufrichtung ersten oder zweiten Führungsrolle (12, 18) dem Querschnitt der Perforationslöcher (16, 17) des Blendenbandes (11) und des Kunststoffbandes (5) entspricht und daß der Grundquerschnitt der Stacheln (15) der in Ablaufrichtung zweiten oder ersten Führungsrolle (13, 19) quer zur Laufrichtung schmaler ist als der Grundquerschnitt der Stacheln (15) der ersten Führungsrolle (12, 18).

14. Vorrichtung nach Anspruch 9, **dadurch gekennzeichnet**, daß die Öffnungen (50) im Blendenband (9) der Polymerisationsstation (1) hinsichtlich ihrer Position stets in gleicher Weise ohne seitliche Versetzung den Perforationslöchern (16, 17) zugeordnet sind.

15. Vorrichtung nach Anspruch 9, **dadurch gekennzeichnet**, daß die Öffnungen (48, 49) im Blendenband (11) der Metallbeschichtungsstation (2) unterschiedlich angeordnet sind, wobei eine Gruppe von Öffnungen (49) in Querrichtung den ungeradzahligen Perforationslöchern (29) und die nächste Gruppe von Öffnungen (48) den geradzahligen Perforationslöchern (28) zugeordnet sind, so daß durch die ungerade Anzahl von Perforationslöchern im Kunststoffband (5) stets eine Versetzung der Metallflächen (21, 23, 25) von Lage zu Lage resultiert.

16. Vorrichtung nach Anspruch 9, **dadurch ge kennzeichnet**, daß wenigstens eines der beiden Blendenbänder (9, 11) als endlos umlaufendes Band ausgebildet ist und mit einer Reinigungsvorrichtung zur Säuberung von Beschichtungsmaterial in Berührung steht.

FIG 1

FIG 2

FIG 3

FIG 10

FIG 4

FIG5

FIG6

FIG7

FIG 8

FIG9

## FIG 11

## FIG 12

# FIG 13

# FIG 14

FIG 15

FIG 16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 147 696 (SEF TECHNOLOGIES) * Seite 6, Zeile 27 - Seite 9, Zeile 27; Seite 9, Zeile 34 - Seite 10, Zeile 14; Seite 13, Zeile 25 - Seite 14, Zeile 4; Figuren 2,3,4,10 * --- | 1,2,4,8 | H 01 G 4/14 H 01 G 13/00 H 01 G 4/40 H 01 F 41/04 H 01 L 21/70 |
| A,D | DE-A-2 900 772 (SIEMENS AG) * Seite 8, Zeile 14 - Seite 10, Zeile 9; Figuren * ----- | 1 | |

**RECHERCHIERTE SACHGEBIETE (Int. Cl.4)**

H 01 G
H 01 F
C 23 C

Der vorliegende Recherchenbericht wurde für alle Patentansprüche erstellt

| Recherchenort | Abschlußdatum der Recherche | Prüfer |
|---|---|---|
| DEN HAAG | 18-04-1989 | SCHUERMANS N.F.G. |